# EUROPÄISCHE PATENTANMELDUNG

(11) **EP 1 752 737 A2**
(43) Veröffentlichungstag der Anmeldung: **14.02.2007**
(21) Anmeldenummer: 06450112.5
(22) Anmeldetag: 10.08.2006
(51) Int. Cl.: G01C 21/20, G06F 3/033

(54) **Tragbare Navigationsvorrichtung und Verfahren zum Funknavigieren**

(30) Priorität: 11.08.2005 AT 13482005
(71) Anmelder: Ftw. Forschungszentrum Telekommunikation Wien Betriebs GmbH, 1220 Wien (DE)
(72) Erfinder: Kunczier, Harald, 2344 Maria Enzersdorf (AT); Baillie, Lynne, Edinburgh EH15 SDT (GB)
(74) Vertreter: Weiser, Andreas

(57) **Zusammenfassung**

Tragbare Navigationsvorrichtung (1) mit einer Zeigeachse (3) für den Einsatz in 3D-Umgebungen (2), mit:
einer Positionsmeßeinrichtung (8),
einer Orientierungsmeßeinrichtung (9),
einer Speichereinrichtung (13) zur Aufnahme eines graphischen 3D-Modells (15) der 3D-Umgebung (2) und von Zusatzinformationen (7) zu Objekten (4) des 3D-Modells (15), und
einer Anzeigeeinrichtung (16) zur Anzeige einer Ansicht (5) des 3D-Modells (15) entsprechend der ermittelten Position und Orientierung,

wobei die Orientierungsmeßeinrichtung (9) einen Magnetfeldsensor (10) und einen Gravitationssensor (11) enthält und in Kombination auswertet,
die Orientierungsmeßeinrichtung (9) auch eine Verdrehung (rot_{y}) um die Zeigeachse (3) ermittelt, und
die Anzeigeeinrichtung (16) die Zusatzinformationen (7) des bzw. der in der Zeigeachse (3) liegenden Objekte(s) (4) in Abhängigkeit von der ermittelten Verdrehung (rot_{y}) anzeigt.

## Beschreibung

Die vorliegende Erfindung betrifft eine tragbare Navigationsvorrichtung mit einer Zeigeachse für den Einsatz in 3D-Umgebungen, mit:
einer Positionsmeßeinrichtung zur Ermittlung der Position der Vorrichtung,
einer Orientierungsmeßeinrichtung zur Ermittlung der Orientierung der Zeigeachse,
einer Speichereinrichtung zur Aufnahme eines graphischen 3D-Modells der 3D-Umgebung, und
einer mit diesen Einrichtungen verbundenen Anzeigeeinrichtung zur Anzeige einer Ansicht des 3D-Modells entsprechend der ermittelten Position und Orientierung,
wobei die Orientierungsmeßeinrichtung einen Magnetfeldsensor und einen Gravitationssensor enthält und in Kombination auswertet, um die Orientierung der Zeigeachse in der 3D-Umgebung zu ermitteln.

Eine Navigationsvorrichtung der eingangs genannten Art ist aus der JP 2003/223095 A bekannt und wird auch als "mobile augmented reality system" (MAR-System) bezeichnet. Damit kann der Benutzer z.B. auf dem Bildschirm seines Mobiltelefons, Personal Digital Assistants (PDAs) usw. eine fortlaufend aktualisierte und seinem aktuellen Standort und Blickwinkel ("point of view") entsprechende Darstellung eines vorbereiteten 3D-Modells seiner Umgebung betrachten.

Aus der US 2003/0218638 A1 ist ein ausschließlich auf Basis von Beschleunigungsmessern arbeitendes MAR-System bekannt, bei welchem der Benutzer mittels Sprachmenüs und Sprachsteuerung ortsbezogene Zusatzinformationen, sog. "location aware content", abrufen kann. Eine solche Sprachsteuerung ist langsam, rechenintensiv und fehleranfällig.

Aus der US 6 466 198 B1 ist es für PDAs bekannt, eine für einen kleinen Bildschirm zu große Bildschirmanzeige durch Kippen des PDAs zu scrollen.

Die Erfindung setzt sich zum Ziel, eine tragbare Navigationsvorrichtung für MAR-Systeme zu schaffen, welche eine besonders einfachere, sichere und intuitive Art der Navigation innerhalb ortsbezogener Inhalte eines MAR-Systems ermöglicht.

Dieses Ziel wird mit einer Vorrichtung der einleitend genannten Art erreicht, die sich gemäß der Erfindung dadurch auszeichnet,
daß die Speichereinrichtung auch Zusatzinformationen zu einzelnen Objekten des 3D-Modells enthält,
daß die Orientierungsmeßeinrichtung auch eine Verdrehung der Vorrichtung um die Zeigeachse ermittelt, und
die Anzeigeeinrichtung die Zusatzinformationen des bzw. der in der Zeigeachse liegenden Objekte(s) in Abhängigkeit von der ermittelten Verdrehung anzeigt.

Die Erfindung beruht auf der Erkenntnis, daß die Kombination eines Magnetfeldsensors mit einem Gravitationssensor nicht nur eine genaue Bestimmung der Orientierung der Zeigeachse sondern der gesamten Navigationsvorrichtung ermöglicht und damit einen zusätzlichen Meßfreiheitsgrad zur Verfügung stellt, welcher für eine vereinfachte Bedienung der Navigationsvorrichtung ausgenützt werden kann: Durch bloßes Kippen der Vorrichtung um die Zeigeachse ("roll") wird die Anzeige der Zusatzinformation ausgelöst. Die Erfindung schafft damit eine besonders einfache, sichere und intuitive Eingabe- bzw. Bedienungseinrichtung für die Darstellung von Zusatzinformationen genau zu jenen Objekten, auf welche der Benutzer zeigt.

Dabei ist es besonders vorteilhaft, wenn gemäß einem weiteren Merkmal der Erfindung die Anzeigeeinrichtung die Zusatzinformationen proportional dem Winkel und/oder der Beschleunigung der Verdrehung über die Ansicht des 3D-Modells schiebt, bevorzugt semitransparent. Dies ergibt eine besonders natürliche Interaktion: Beim seitlichen Kippen gleitet die Zusatzinformation in der Art eines Overlay-Menüs bzw. Schiebers gleichsam "durch Schwerkraft" über die darunterliegende 3D-Modellansicht.

Besonders vorteilhaft ist es, wenn die Positionsmeßeinrichtung in an sich bekannter Weise einen Satellitennavigationsempfänger enthält, z.B. einen GPS-, A-GPS-, DGPS-, GLONASS-, GALILEO-, EGNOS-, WAAS-Empfänger usw. Alternativ oder zusätzlich kann die Positionsmeßeinrichtung auch einen Mobilfunkempfänger enthalten, z.B. ein GSM-Mobiltelefonmodul, welches aufgrund der Signallaufzeiten zu den Basisstationen und seiner Zellinformation Information über seinen Standort erhalten kann.

In einem weiteren Aspekt schafft die Erfindung auch ein entsprechendes Verfahren zum Funknavigieren mit Hilfe einer Navigationsvorrichtung wie in den Ansprüchen 4 bis 6 definiert.

Die Erfindung wird nachstehend anhand von in den beigeschlossenen Zeichnungen dargestellten Ausführungsbeispielen näher erläutert. In den Zeichnungen zeigt:
Fig. 1 den Einsatz der Navigationsvorrichtung der Erfindung in einer 3D-Umgebung schematisch in der Perspektivansicht;
Fig. 2 ein Beispiel einer auf der Vorrichtung angezeigten 3D-Modellansicht vor der 3D-Umgebung;
Fig. 3 die Vorrichtung der Erfindung mit ihren Bewegungsachsen in der Perspektivansicht;
Fig. 4 ein Blockschaltbild der Vorrichtung von Fig. 3; und die Fig. 5 und 6 Bildschirmanzeigen der Vorrichtung.

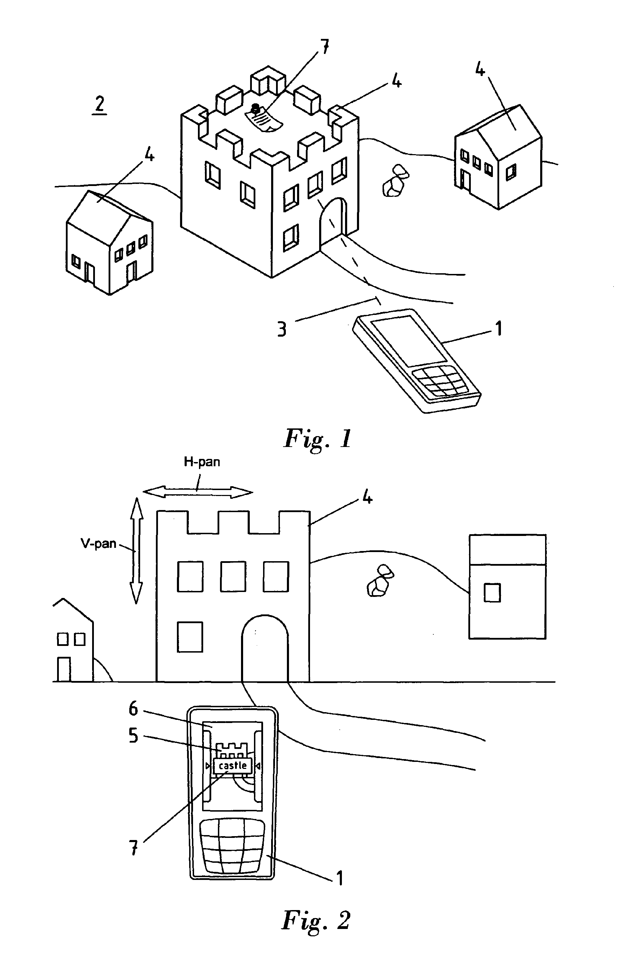

Fig. 1 zeigt eine tragbare Navigationsvorrichtung 1 im Rahmen eines "mobile augmented reality system" (MAR-Systems) in einer ausschnittsweise dargestellten 3D-Umgebung 2, z.B. auf einer Straße oder einem öffentlichen Platz. Die Navigationsvorrichtung 1 kann ein tragbarer Computer, Personal Digital Assistant (PDA), ein Mobiltelefon, ein Satellitennavigationsgerät usw. sein.

Die Vorrichtung 1 besitzt eine Zeigeachse 3, mit welcher sie in Richtung auf bestimmte Objekte 4 der 3D-Umgebung 2 orientiert werden kann. Wie im Anschluß noch näher erläutert wird, verfügt die Vorrichtung 1 über ein gespeichertes graphisches 3D-Modell der 3D-Umgebung 2 und zeigt eine Ansicht 5 des 3D-Modells entsprechend ihrer aktuellen Position und Orientierung ("point of view", pov) auf einem Bildschirm 6 an (Fig. 2). Auf dem Bildschirm 6 werden auch Zusatzinformationen 7 über das Objekt 4, auf welches die Zeigeachse 3 weist, angezeigt.

Die Zusatzinformationen 7 können beispielsweise Point-of-Interest-(POI-)Daten sein, wie Adressen, Namen von Firmen und Gebäuden, Öffnungszeiten, aktuelle Theater- und Kinoprogramme, Nachrichten, Fahrpläne, oder auch zeitabhängige Daten wie historische Ansichten, zukünftige (geplante) Ansichten des Objektes 4 usw. Auch objektbezogene bzw. kontextspezifische Auswahlmenüs fallen unter den hier verwendeten Begriff von Zusatzinformation 7.

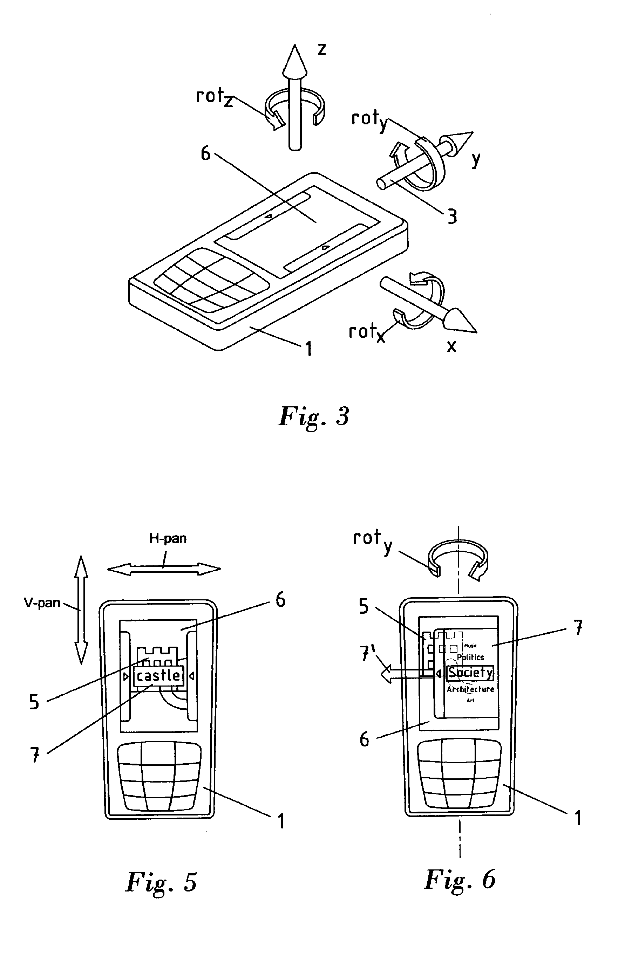

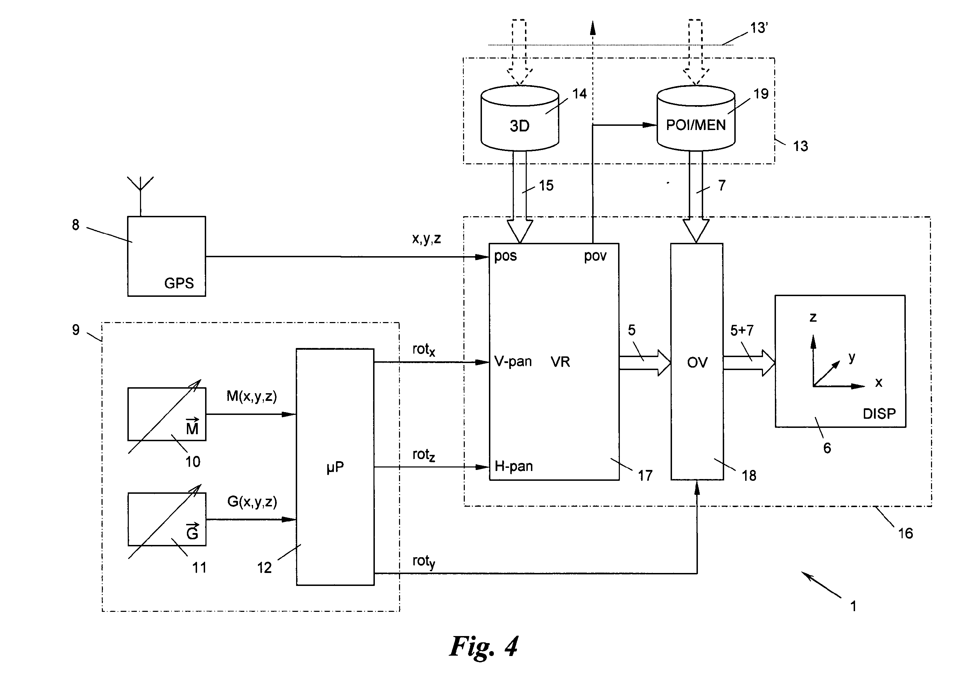

Fig. 3 zeigt die möglichen Freiheitsgrade der Orientierung der Vorrichtung 1. Es wird ein kartesisches Koordinationsystem gewählt, dessen y-Achse mit der Zeigeachse 3 zusammenfällt, dessen z-Achse normal zur Ebene der Anzeige 6 liegt, und dessen x-Achse in der Ebene der Anzeige 6 liegt.

Unter diesen Annahmen ist die Orientierung der Zeigeachse 3 und damit die Auswahl eines Objektes 4 durch (a) die Drehung bzw. den Raumwinkel rotₓ um die x-Achse ("pitch") und (b) die Drehung bzw. den Raumwinkel rot_{z} um die z-Achse ("heading") definiert. Diese Drehungen entsprechen gleichzeitig näherungsweise - u.zw. bei kleinen Winkeln - vertikalen bzw. horizontalen Verschiebebewegungen ("pan") der 3D-Modellansicht 5 eines Objektes 4 auf dem Bildschirm 6, siehe Pfeile "V-Pan" und "H-Pan" in den Fig. 2 und 5.

Die Drehbewegung rot_{y} um die Zeigeachse 3 ("roll") wird für die Auswahl des Objektes 4 und die Aktualisierung der Ansicht 5 nicht benötigt bzw. ausgewertet, da dies nur zu einer Rotation der Ansicht 5 auf dem Bildschirm 6 führen würde. Stattdessen wird die Drehbewegung rot_{y} zur Steuerung der Anzeige der Zusatzinformation 7 herangezogen, wie später noch ausführlicher erläutert wird.

Fig. 4 zeigt den Aufbau der Navigationsvorrichtung 1 in Form eines schematischen Blockschaltbildes. Die Vorrichtung 1 umfaßt eine Positionsmeßeinrichtung 8 zur Bestimmung ihrer aktuellen Position x, y, z in der 3D-Umgebung 2. Die Positionsmeßeinrichtung 8 kann ein Satellitennavigationsempfänger, z.B. ein GPS-, A-GPS, DGPS, GLONASS-, GALILEO-, EGNOS-, WAAS-Empfänger usw. sein. Alternativ kann die Positionsmeßeinrichtung 8 ein Mobilfunkempfänger sein, beispielsweise ein GSM-Mobiltelefon oder GSM-Empfangsmodul, welches seine Position aus den Signallaufzeiten und seiner Zellinformation usw. ermittelt, wie auf dem Gebiet der "location based services" bekannt. Eine weitere Alternative ist, daß die Positionsmeßeinrichtung 8 ihre Position aus einem Netzwerk von Funkbaken, Infrarotbaken, Induktionsschleifen usw. bezieht.

Die Vorrichtung 1 verfügt ferner über eine Orientierungsmeßeinrichtung 9 mit einem Magnetfeldsensor 10 und einem Gravitationssensor 11. Der Magnetfeldsensor 10 ermittelt die Richtung des Erdmagnetfeldvektors M an der Position x, y, z der Vorrichtung 1, und der Gravitationssensor 11 ermittelt die Richtung des Gravitationsvektors G an der Position x, y, z der Vorrichtung 1.

Ein der Orientierungsmeßeinrichtung 9 zugeordneter oder darin enthaltener Mikroprozessor 12 berechnet aus den Vektordaten M, G die aktuelle statische Orientierung der Vorrichtung 1, d.h. die Orientierung ihrer Zeigeachse 3, in Form ihrer aktuellen Verdrehwinkel rotₓ ("pitch") und rot_{z} ("heading"), und auch die Verdrehung rot_{y} ("roll") um die Zeigeachse 3 (Fig. 3).

Als MAR-System verfügt die Vorrichtung 1 ferner über eine Speichereinrichtung 13 mit einem ersten Speicher 14 zur Aufnahme eines graphischen 3D-Modells 15 der 3D-Umgebung 2. Eine an die Positionsmeßeinrichtung 8, die Orientierungsmeßeinrichtung 9 und die Speichereinrichtung 13 angeschlossene Anzeigeeinrichtung 16 enthält eine Virtual-Reality-Engine 17, welche entsprechend der aktuellen Position x, y, z und der aktuellen Orientierung rotₓ, rot_{z} der Zeigeachse 3 (point of view) eine Ansicht 5 des 3D-Modells 15 generiert und auf der Anzeige 6 darstellt.

Das 3D-Modell 15 kann alternativ oder zusätzlich über eine externe Schnittstelle 13' der Vorrichtung 1, z.B. einen Mobilfunkkanal, von einer (nicht dargestellten) Zentrale geladen oder nachgeladen werden. Der Speicher 14 könnte sogar entfallen; bevorzugt wird in den Speicher 14 nur jener Abschnitt des 3D-Modells 15 geladen, welcher die unmittelbare bzw. sichtbare Umgebung 2 rund um die Position x, y, z wiedergibt. Auch ist es möglich, die Detailtreue und Auflösung des geladenen Abschnitts des 3D-Modells 15 je nach Entfernung von der aktuellen Position x, y, z anzupassen, d.h. weit entfernte Objekte mit geringerer Auflösung zu laden.

Es ist zu beachten, daß die kombinierte Auswertung sowohl des Magnetfeldvektors M als auch des Gravitationsvektors G in der Orientierungsmeßeinrichtung 9 die Bestimmung der Orientierung der Zeigeachse 3 in allen drei Koordinaten x, y, z der 3D-Umgebung, d.h. in Polarkoordinaten ausgedrückt in beiden Raumwinkeln rotₓ, rot_{z}, ermöglicht.

Die von der Orientierungsmeßeinrichtung 9 zusätzlich ermittelte Verdrehung rot_{y} der Vorrichtung 1 um ihre Zeigeachse 3 steuert eine Overlay-Schaltung 18 in der Anzeigeeinrichtung 16 zur Einblendung der Zusatzinformationen 7, und zwar in der folgenden Art und Weise.

Die Speichereinrichtung 13 enthält einen Speicher 19, welcher zu einzelnen oder allen Objekten des 3D-Modells 15 Zusatzinformationen 7 enthält, beispielsweise Point-of-Interest-Daten POI oder ortsbezogene Menüs MEN. Die Zusatzinformationen 7 können beispielsweise Adressen, Namen von Strassen oder Gebäuden, Fahrpläne eines angepeilten Bahnhofs oder einer Verkehrsmittelstation, Veranstaltungsprogramme eines angepeilten Veranstaltungsgebäudes wie Kinos, Theaters, usw., historische Daten oder alternative Ansichten einer Sehenswürdigkeit, oder auch Werbungen oder Informationen zu einem Firmengebäude usw. sein.

Die Zusatzinformationen 7 können alternativ oder zusätzlich über die optionale Schnittstelle 13' der Vorrichtung 1 von der (nicht dargestellten) Zentrale entsprechend der aktuellen Position und Orientierung (point of view) geladen bzw. nachgeladen werden. Im einfachsten Fall entfällt der Speicher 19 und die Zusatzinformationen 7 werden direkt in Abhängigkeit des point of view über die Schnittstelle 13', z.B. einen Mobilfunkkanal, geladen.

Wenn die Zusatzinformationen 7 über die Schnittstelle 13' bezogen werden, können sie insbesondere auch je nach Tageszeit, Jahreszeit, Wetter, Profil des Benutzers, Status einer Benutzersitzung usw. variieren; der Begriff "Zusatzinformationen" 7 umfaßt auch Daten, die im Rahmen von interaktiven Diensten mit einer entfernten Zentrale ausgetauscht werden. Beispiele solcher orts- und zeitbezogener Anwendungen sind Fahrkarten- oder Kinokartenkäufe, das Anwählen der automatisch nachgeladenen Telephonnummer eines Objekts, auf das der Benutzer gerade zeigt, usw.

Die Overlay-Schaltung 18 der Anzeigeeinrichtung 16 zeigt die Zusatzinformationen 7 des bzw. der in der Zeigeachse 3 liegenden Objekte(s) 4 in Abhängigkeit der von der Orientierungsmeßeinrichtung 9 ermittelten Verdrehung rot_{y} um die Zeigeachse 3 an, und zwar bevorzugt proportional dem Winkel rot_{y}, oder der Beschleunigung d(rot_{y})/dt des Drehwinkels rot_{y}, oder gemäß einer beliebigen Funktionsbeziehung f(rot_{y}) auf Grundlage des Winkels rot_{y}. Dadurch "schiebt" sich die Zusatzinformation 7 gleichsam in der Art eines Rollover-Menüs oder Schiebers von der Seite her über die 3D-Modellansicht 5 auf der Anzeige 6, wie in Fig. 6 durch den Pfeil 7' angedeutet. Es wird ersichtlich, daß dies zu einer besonders natürlichen Benutzerinteraktion führt. Für den Benutzer gleitet die Zusatzinformation 7 wie von einem fiktiven Gewicht belastet "schwerkraftgesteuert" über die Ansicht 5.

Besonders vorteilhaft ist es, wenn die Zusatzinformation 7 semitransparent dargestellt wird, so daß die darunterliegende 3D-Modellansicht 5 noch schemenhaft erkennbar bleibt (Fig. 6).

Wenn die Zusatzinformation 7 ein objektbezogenes Menü ist, kann sie ihrerseits beispielsweise Menüpunkte oder Menübalken darbieten, welche auf herkömmliche Weise, z.B. mit Hilfe eines Scroll-Rades oder mittels Cursortasten, ausgewählt werden können.

Die Zusatzinformation 7 kann z.B. durch Drücken einer Taste oder nach entsprechender Auswahl eines Menüpunktes wieder entfernt werden, oder durch entgegengesetztes Verdrehen der Vorrichtung 1 um die Zeigeachse 3 "zur Seite gleiten gelassen" werden.

Das hier erörterte System implementiert das folgende Verfahren zum Funknavigieren in der 3D-Umgebung 2 mit Hilfe der tragbaren Navigationsvorrichtung 1 mit ihrer Zeigeachse 3:
Ermitteln der Position x, y, z der Vorrichtung 1 aus Funksignalen, welche in der 3D-Umgebung 2 verfügbar sind, beispielsweise Satellitennavigations-Funksignalen oder Mobiltelefonnetz-Funksignalen,
Ermitteln der statischen Orientierung der Zeigeachse 3 in allen ihren Raumwinkeln rotₓ, rot_{z} aus einer auf die Vorrichtung 1 bezogenen Messung der Orientierung M des Erdmagnetfelds und der Gravitation G an dieser Position x, y, z, und
Anzeigen einer Ansicht 5 des graphischen 3D-Modells 15 der 3D-Umgebung 2 auf der Anzeige 6 der Vorrichtung 1 entsprechend der ermittelten Position x, y, z und Orientierung rotₓ, rot_{z}.

Bevorzugt wird dabei durchgeführt:
Ermitteln der Verdrehung rot_{y} der Vorrichtung 1 um ihre Zeigeachse 3, und
Anzeigen der Zusatzinformationen 7 zu einem oder mehreren in der Zeigeachse 3 liegenden Objekte(n) 4 des 3D-Modells 15 in Abhängigkeit von der ermittelten Verdrehung rot_{y}, und zwar insbesondere proportional dem Winkel rot_{y} und/oder der Beschleunigung d(rot_{y})/dt der Verdrehung rot_{y}.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Tragbare Navigationsvorrichtung (1) mit einer Zeigeachse (3) für den Einsatz in 3D-Umgebungen (2), mit:
einer Positionsmeßeinrichtung (8) zur Ermittlung der Position der Vorrichtung,
einer Orientierungsmeßeinrichtung (9) zur Ermittlung der Orientierung der Zeigeachse (3),
einer Speichereinrichtung (13) zur Aufnahme eines graphischen 3D-Modells (15) der 3D-Umgebung (2), und
einer mit diesen Einrichtungen verbundenen Anzeigeeinrichtung (16) zur Anzeige einer Ansicht (5) des 3D-Modells (15) entsprechend der ermittelten Position und Orientierung,
wobei die Orientierungsmeßeinrichtung (9) einen Magnetfeldsensor (10) und einen Gravitationssensor (11) enthält und in Kombination auswertet, um die Orientierung der Zeigeachse (3) in der 3D-Umgebung (2) zu ermitteln, **dadurch gekennzeichnet,**
**daß** die Speichereinrichtung (13) auch Zusatzinformationen (7) zu einzelnen Objekten (4) des 3D-Modells (15) enthält,
die Orientierungsmeßeinrichtung (9) auch eine Verdrehung (rot_{y}) der Vorrichtung (1) um die Zeigeachse (3) ermittelt, und
die Anzeigeeinrichtung (16) die Zusatzinformationen (7) des bzw. der in der Zeigeachse (3) liegenden Objekte(s) (4) in Abhängigkeit von der ermittelten Verdrehung (rot_{y}) anzeigt.

2. Navigationsvorrichtung nach Anspruch 1, **dadurch gekennzeichnet, daß** die Anzeigeeinrichtung (16) die Zusatzinformationen (7) proportional dem Winkel (rot_{y}) und/oder der Beschleunigung (d(rot_{y})/dt) der genannten Verdrehung über die Ansicht (5) des 3D-Modells (15) schiebt, bevorzugt semitransparent.

3. Navigationsvorrichtung nach Anspruch 1 oder 2, **dadurch gekennzeichnet, daß** die Positionsmeßeinrichtung (8) einen Satellitennavigationsempfänger und/oder Mobilfunkempfänger enthält.

4. Verfahren zum Funknavigieren in einer 3D-Umgebung mit Hilfe einer tragbaren Navigationsvorrichtung (1) mit einer Zeigeachse (3), umfassend:
Ermitteln der Position (x, y, z) der Vorrichtung (1) aus Funksignalen,
Ermitteln der Orientierung der Zeigeachse (3) in allen ihren Raumwinkeln (rotₓ, rot_{z}) aus einer auf die Vorrichtung (1) bezogenen Messung der Orientierung des Erdmagnetfelds (M) und der Gravitation (G) an dieser Position (x, y, z), und
Anzeigen einer Ansicht (5) eines graphischen 3D-Modells (15) der 3D-Umgebung (2) auf einer Anzeige (6) der Vorrichtung (1) entsprechend der ermittelten Position (x, y, z) und Orientierung (rotₓ, rot_{z}),
**gekennzeichnet durch** die Schritte:
Ermitteln einer Verdrehung (rot_{y}) der Vorrichtung (1) um die Zeigeachse (3), und
Anzeigen von Zusatzinformationen (7) zu einem oder mehreren in der Zeigeachse (3) liegenden Objekte(n) (4) des 3D-Modells (15) in Abhängigkeit von der ermittelten Verdrehung (rot_{y}).

5. Verfahren nach Anspruch 4, **dadurch gekennzeichnet, daß** die Zusatzinformationen (7) proportional dem Winkel (rot_{y}) und/oder der Beschleunigung (d(rot_{y})/dt) der Verdrehung über die Ansicht (5) des 3D-Modells (15) geschoben werden.

6. Verfahren nach Anspruch 4 oder 5, **dadurch gekennzeichnet, daß** die Position (x, y, z) aus Satellitennavigations-und/oder Mobilfunksignalen ermittelt wird.
